# EUROPÄISCHE PATENTSCHRIFT

(11) **EP 1 834 066 B1**
(45) Veröffentlichungstag und Bekanntmachung des Hinweises auf die Patenterteilung: **07.10.2009**
(21) Anmeldenummer: 05807981.5
(22) Anmeldetag: 07.11.2005
(51) Int. Cl.: F01D 5/18

(54) **TURBINENSCHAUFEL FÜR EINE GASTURBINE, VERWENDUNG EINER TURBINENSCHAUFEL SOWIE VERFAHREN ZUM KÜHLEN EINER TURBINENSCHAUFEL**
TURBINE BLADE FOR A GAS TURBINE, USE OF A TURBINE BLADE AND METHOD FOR COOLING A TURBINE BLADE
AUBE DE TURBINE POUR TURBINE A GAZ, UTILISATION D'UNE AUBE DE TURBINE ET PROCEDE DE REFROIDISSEMENT D'UNE AUBE DE TURBINE

(30) Priorität: 23.11.2004 EP 04027789
(43) Veröffentlichungstag der Anmeldung: 19.09.2007
(73) Patentinhaber: SIEMENS AKTIENGESELLSCHAFT, 80333 München (DE)
(72) Erfinder: BALDAUF, Stefan, 80999 München (DE); HÄNDLER, Michael, 40699 Erkrath (DE); LERNER, Christian, 45701 Herten (DE)
(86) Internationale Anmeldenummer: PCT/EP2005/055779
(87) Internationale Veröffentlichungsnummer: WO 2006/056525

(56) Entgegenhaltungen:
- EP-A- 1 369 554
- DE-A1- 1 601 613
- DE-C- 862 691
- US-B1- 6 183 197
- US-B1- 6 328 531

## Beschreibung

Turbinenschaufel für eine Gasturbine, Verwendung einer Turbinenschaufel sowie Verfahren zum Kühlen einer Turbinenschaufel

Die Erfindung bezieht sich auf eine Turbinenschaufel für eine Gasturbine. Sie bezieht sich ferner auf eine Gasturbine mit einer derartigen Turbinenschaufel und ein Verfahren zum Kühlen einer Turbinenschaufel.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Anzahl von Brennern verbrannt, wobei von einem Luftverdichter verdichtete Luft zugeführt wird. Durch die Verbrennung des Brennstoffs wird ein unter hohem Druck stehendes Arbeitsmedium mit einer hohen Temperatur erzeugt. Dieses Arbeitsmedium wird in eine nachgeschaltete Turbineneinheit geführt, wo es sich arbeitsleistend entspannt.

Die Turbineneinheit einer Gasturbine weist zur Impulsübertragung des Arbeitsmediums auf die Turbinenwelle eine Anzahl von mit der Turbinenwelle verbundenen, rotierbaren Laufschaufeln auf. Die Laufschaufeln sind dazu kranzförmig an der Turbinenwelle angeordnet und bilden somit eine Anzahl von Laufschaufelkränzen oder Laufschaufelreihen. Die Turbine und der Verdichter sind auf einer gemeinsamen, auch als Turbinenläufer bezeichneten Turbinenwelle angeordnet, mit der auch der Generator bzw. die Arbeitsmaschine verbunden ist, und die um ihre Mittelachse drehbar gelagert ist.

Weiterhin umfasst die Turbineneinheit üblicherweise eine Anzahl von feststehenden Leitschaufeln, die ebenfalls kranzförmig unter der Bildung von Leitschaufelkränzen oder Leitschaufelreihen an einem Innengehäuse bzw. dem Stator der Turbine befestigt sind. Die Laufschaufeln dienen dabei zum Antrieb der Turbinenwelle durch Impulsübertrag vom die Turbine durchströmenden Arbeitsmedium. Die Leitschaufeln dienen hingegen zur Strömungsführung des Arbeitsmediums zwischen jeweils zwei in Strömungsrichtung des Arbeitsmediums gesehen aufeinander folgenden Laufschaufelreihen oder Laufschaufelkränzen. Ein aufeinander folgendes Paar aus einem Kranz von Leitschaufeln oder einer Leitschaufelreihe und aus einem Kranz von Laufschaufeln oder einer Laufschaufelreihe wird dabei auch als Turbinenstufe bezeichnet.

Eine Leitschaufel weist in der Regel eine auch als Schaufelfuß bezeichnete Plattform auf, die zur Fixierung der jeweiligen Leitschaufel am Innengehäuse der Turbine als Wandelement angeordnet ist und die die äußere Begrenzung eines Heißgaskanals für das die Turbine durchströmende Arbeitsmedium bildet. Für eine effiziente Strömungsführung des Arbeitsmediums in Richtung auf die sich einer Leitschaufelreihe anschließenden Laufschaufelreihe weist eine der Leitschaufelreihe zugeordnete Leitschaufel üblicherweise ein gewölbtes, flügelförmiges Querschnittsprofil auf, so dass bei möglichst gering gehaltenen Reibungsverlusten an der jeweiligen Leitschaufel sich die vorgesehene Strömungsführung einstellt und somit die Leitschaufelreihe bzw. die ihr zugeordnete Turbinenstufe einen möglichst hohen Wirkungsgrad besitzt. Dazu weist die Vorderkante einer Leitschaufel einen runden Querschnitt auf, der sich zur spitz zulaufenden Hinterkante der Leitschaufel verjüngt. Eine Laufschaufel ist ähnlich geformt, wobei in der Regel spezifische Details wie etwa die maximale Profildicke, der Krümmungsradius an der Vorderkante usw. an den Einsatzzweck angepasst, d. h. für eine besonders effiziente Impulsübertragung vom Arbeitsmedium auf die jeweilige Laufschaufel optimiert sind.

Bei der Auslegung oben beschriebener Gasturbinen ist zusätzlich zur erreichbaren Leistung üblicherweise ein besonders hoher Wirkungsgrad ein Auslegungsziel. Eine Erhöhung des Wirkungsgrades lässt sich dabei aus thermodynamischen Gründen grundsätzlich durch eine Erhöhung der Temperatur erreichen, mit dem das Arbeitsmedium von der Brennkammer ab- und in die Turbineneinheit einströmt. Daher werden Temperaturen von etwa 1200 °C bis 1500 °C für derartige Gasturbinen angestrebt und auch erreicht.

Bei derartig hohen Temperaturen des Arbeitsmediums sind jedoch die diesem Medium ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere der Turbinenschaufeln, notwendig. Um thermische Verspannungen des Materials zu verhindern, welche die Lebensdauer der Komponenten begrenzen, wird in der Regel angestrebt, eine möglichst gleichmäßige Kühlung der Komponenten zu erreichen. Als Kühlmittel kommt dabei üblicherweise Kühlluft zum Einsatz, auf die die Wärme der zu kühlenden Bauteile übertragen wird. Dabei kann die Kühlluft bei der so genannten Prallkühlung im Wesentlichen senkrecht auf eine zu kühlende Fläche geleitet werden oder bei der so genannten Filmkühlung entlang der zu kühlenden Fläche, d. h. im Wesentlichen tangential zu ihr, geführt werden. Weiterhin können zur konvektiven Kühlung von Turbinenkomponenten in diese integrierte Kühlluftkanäle vorgesehen sein. Schließlich lassen sich die verschiedenen Kühlkonzepte auch miteinander kombinieren.

Zur Kühlung der thermisch besonders stark belasteten Turbinenschaufeln, insbesondere der Leitschaufeln, wird üblicherweise Kühlluft in deren Inneres geleitet, so dass die Wände der jeweiligen Turbinenschaufel von innen her gekühlt werden. Zumindest ein Teil dieser Kühlluft wird durch Austrittsöffnungen in Strömungsrichtung des Arbeitsmediums nach hinten aus der Hinterkante der Turbinenschaufel aus dem Schaufelinneren herausgeblasen. Um die Hinterkante aerodynamisch günstig zu gestalten bzw. eine wirksame Kühlung der vergleichsweise schlanken Hinterkante mit der herausgeblasenen Kühlluft zu ermöglichen, ist unter Beibehaltung der aerodynamisch besonders günstigen Kontur auf der Saugseite des Schaufelblatts die ursprünglich im Hinterkantenbereich mit der saugseitigen Schaufelwand keilförmig zusammenlaufende druckseitige Schaufelwand so weit zurückgeschnitten, dass der über die Endkante der druckseitigen Schaufelwand überstehende Abschnitt der saugseitigen Schaufelwand eine so genannte Hinterkantenfahne mit geringer Dicke bildet. Diese Hinterkantengestaltung wird auch als "Cut-Back-Hinterkante" bezeichnet. Eine solche Turbinenschaufel ist aus US-B 6,328,531 bekannt. Je nach Hersteller sind auch noch andere Bezeichnungen geläufig, wie z. B. "Pressure Side Bleed". Die Hinterkantenfahne wird mittels Filmkühlung durch die aus dem Spalt zwischen der Endkante der druckseitigen Schaufelwand und der Hinterkantenfahne der saugseitigen Schaufelwand ausströmende Kühlluft gekühlt. Unterbrochen werden die freistehenden Abschnitte der Hinterkantenfahne von auch als "Land" bezeichneten Versteifungsabschnitten oder Stegen, bei denen die druckseitige Schaufelwand zur Stabilisierung der Turbinenschaufel im Hinterkantenbereich jeweils bis zum Hinterkantenende ausgedehnt ist, so dass die Hinterkante dort vergleichsweise massiv gehalten ist.

Problematisch ist hierbei, dass trotz der beschriebenen Kühlung der Hinterkantenfahne in diesem Bereich bauartbedingte Überhitzungen auftreten können. Insbesondere eine dadurch verursachte Rissbildung wirkt sich für die betroffene Turbinenschaufel lebendauerbegrenzend aus. Da bei den für die Behebung derartiger Verschleißschäden notwendigen Wartungsarbeiten meist große Teile der Gasturbine bzw. der jeweiligen Turbineneinheit demontiert und anschließend wieder zusammengesetzt werden müssen, entstehen neben den Kosten für die Beschaffung und den Einbau der Ersatzteile auch noch relativ lange Ausfallzeiten. Der Erosion der Turbinenschaufeln, insbesondere im Bereich ihrer jeweiligen Hinterkante, kann zwar durch den vermehrten Einsatz von Kühlluft entgegengewirkt werden, jedoch mindert dies den Gesamtwirkungsgrad der Gasturbine.

Der Erfindung liegt daher die Aufgabe zugrunde, eine Turbinenschaufel für eine Gasturbine anzugeben, die bei einem niedrigen Kühlluftbedarf eine besonders hohe Lebensdauer aufweist. Weitere Aufgabe ist die Angabe einer Verwendung einer solchen Turbinenschaufel. Außerdem soll ein Verfahren zum Kühlen einer Turbinenschaufel angegeben werden.

Bezüglich der Turbinenschaufel gemäß Anspruch 1 wird die Aufgabe erfindungsgemäß gelöst, indem die druckseitige Fläche der Hinterkantenfahne eine Anzahl von muldenförmigen Vertiefungen aufweist.

Die Erfindung geht dabei von der Überlegung aus, dass sich im Bereich der Hinterkantenfahne das an der Druckseite entlangströmende Arbeitsmedium bzw. Heißgas mit der aus dem Schaufelinneren ausströmenden Kühlluft vermischt, so dass gerade die aufgrund ihrer schlanken Bauform besonders empfindliche Hinterkantenfahne vergleichsweise warmer Kühlluft mit entsprechend verringertem Kühlvermögen ausgesetzt ist. Dadurch kann eine Überhitzung des Hinterkantenendes auftreten, die möglicherweise zu Rissbildungen und damit zu einer herabgesetzten Lebensdauer der jeweiligen Turbinenschaufel führt. Weiterhin geht die Erfindung von der Überlegung aus, dass im Interesse eines hohen Wirkungsgrades der Gasturbine auf einen vermehrten Einsatz von Kühlluft verzichtet werden sollte. Stattdessen sollte die Anordnung zur Kühlung des Hinterkantenbereichs derart gestaltet sein, dass das nach der Vermischung mit dem heißen Arbeitsmedium verbleibende Kühlpotential der vorhandenen Kühlluft möglichst vollständig ausgenutzt wird. Dazu sollte der Wärmeübergang von der Hinterkante bzw. der Hinterkantenfahne auf das entlangströmende Heißgas-/Kühlluft-Gemisch erhöht werden.

Dabei sollten geeignete Elemente an der Hinterkantenfahne derart gestaltet sein, dass einerseits eine Strömungsbeeinflussung oder Verwirbelung des tangential entlang der Hinterkantenfahne strömenden Heißgas-/Kühlluft-Gemischs eintritt, die einen erhöhten Wärmeübergang bewirkt. Diese Strömungsbeeinflussung sollte jedoch andererseits derart ausgelegt sein, dass kein Abriss bzw. keine Ablenkung des Kühlfilms von der zu kühlenden Fläche erfolgt. Zu diesem Zweck sind muldenförmige Vertiefungen, so genannte "Dimples", vorgesehen, die die Turbulenz des an der Hinterkantenfahne entlangströmenden Kühlfilms erhöhen, jedoch nicht zu seiner Ablenkung von der Hinterkantenfläche führen. Dabei erhöht sich die abführbare Wärmemenge, während ein unerwünschter Druckverlust vermieden wird. Diese Vertiefungen sind dabei so ausgestaltet, dass diese jeweils eine ausschließlich in der druckseitigen Fläche der Hinterkantenfahne umlaufende Berandungskante aufweisen.

Vorteilhafterweise weist eine Anzahl der in die Hinterkantenfahne eingebrachten Vertiefungen jeweils eine elliptische, insbesondere eine kreisförmige, Berandungskante auf. In einer besonders geeigneten Ausführungsvariante, die gegenüber einer glatten Hinterkantenfahne nur eine ausgesprochen geringfügige Erhöhung des Strömungswiderstandes bewirkt, kommt eine derartige Berandung dadurch zustande, dass die jeweilige Vertiefung die Gestalt eines Kugelabschnittes besitzt.

Als geeignete Anpassung der Vertiefungen an die Geschwindigkeit und die Durchsatzmenge des an der Hinterkante entlang strömenden Arbeitsmedium-/Kühlluft-Gemisches und an die Größe der Turbinenschaufel, beträgt der Radius im Falle einer Vertiefung mit kreisförmiger Berandung vorzugsweise etwa 1/10 bis 1/4 der Breite der Hinterkantenfahne. Die (maximale) Tiefe eines Kugelabschnitts entspricht vorteilhafterweise etwa 1/3 des korrespondierenden Kugelradius. Vertiefungen mit leicht von der Kreisform abweichender Berandung, z. B. elliptischer Berandung mit geringer Exzentrizität, sind vorzugsweise in Bezug auf ihre Tiefe und ihre ebene Ausdehnung ähnlich dimensioniert wie die Vertiefungen mit kreisförmiger Berandung bzw. mit kugelabschnittsförmiger Gestalt.

Für eine besonders gleichmäßige Beeinflussung des entlangströmenden Arbeitsmedium-/Kühlluft-Gemisches sind die Vertiefungen vorzugsweise regelmäßig auf der druckseitigen Fläche der Hinterkantenfahne verteilt, wobei der Abstand zwischen den Berandungen je zwei benachbarter Vertiefungen bei kugelabschnittsförmiger Gestalt vorzugsweise das ein- bis eineinhalbfache des Kugeldurchmessers beträgt.

Die vorliegende Turbinenschaufel, deren Hinterkantenfahne muldenförmige Vertiefungen aufweist, wird erfindungsgemäß in einer vorzugsweise stationären Gasturbine verwendet, um die auf die Angabe einer Verwendung der vorgenannten Turbinenschaufel gerichteten Aufgabe zu lösen. Insbesondere kann es sich bei der Turbinenschaufel um eine Leitschaufel handeln. Vorzugsweise sind jeweils eine Anzahl dieser Leitschaufeln in einer Anzahl von Leitschaufelreihen zusammengefasst. Entsprechendes gilt im Falle von Laufschaufeln. Insbesondere kann eine mit konventionellen Turbinenschaufeln ausgestattete Gasturbine zur Erhöhung ihres Wirkungsgrades mit den bezüglich der Hinterkantenkühlung verbesserten Turbinenschaufeln nachgerüstet werden.

Bezüglich des Verfahrens gemäß Anspruch 8 wird die Aufgabe gelöst, indem an der Hinterkantenfahne entlangströmende Kühlluft durch an der Hinterkantenfahne angeordnete Vertiefungen lokal verwirbelt wird.

Die mit der Erfindung erzielten Vorteile bestehen insbesondere darin, dass bei einer Turbinenschaufel mit so genannter Cut-Back Hinterkante durch das gezielte Aufbringen einer Oberflächenstruktur auf die druckseitige Fläche der Hinterkantenfahne mit vielen vergleichsweise kleinen und flachen Mulden ("Dimples"), ähnlich der Oberfläche eines Golfballs, ein verbesserter Wärmeübergang auf die vorbeiströmende Kühlluft erreicht wird. Dadurch kann in diesem besonders kritischen Bereich die thermische Belastung gesenkt und damit die Schädigung des Hinterkantenendes vermieden oder zumindest verlangsamt werden, so dass das Hinterkantenende bzw. die zugeordnete Turbinenschaufel eine höhere Lebensdauer aufweist und/oder bei höheren Temperaturen betrieben werden kann. Da weiterhin durch die Dimples der Strömungswiderstand gegenüber einer Turbinenschaufel mit glatter Hinterkantenfahne nicht erhöht wird und somit der Kühlluftstrahl bzw. das Arbeitsmedium keinen Druckverlust erleidet, sprich die aerodynamischen Leistungsdaten der Turbinenschaufel erhalten bleiben, lässt sich aufgrund der Einsparung von Kühlluft auch ein gesteigerter Gesamtwirkungsgrad der jeweiligen Turbineneinheit erreichen. Die Oberflächenstruktur kann bei entsprechender Gestaltung der Gussform mit vergleichsweise geringem Aufwand direkt beim Guss der Turbinenschaufel eingebracht werden.

Ein Ausführungsbeispiel der Erfindung wird anhand einer Zeichnung näher erläutert. Darin zeigen:
- FIG 1: einen Längsschnitt durch eine Gasturbine,
- FIG 2: eine teilgeschnittene Seitenansicht einer Turbinen- schaufel der Gasturbine nach FIG 1, und
- FIG 3: einen Ausschnitt aus dem Querschnitt der Turbinen- schaufel nach FIG 2.

Gleiche Teile sind allen Figuren mit denselben Bezugszeichen versehen.

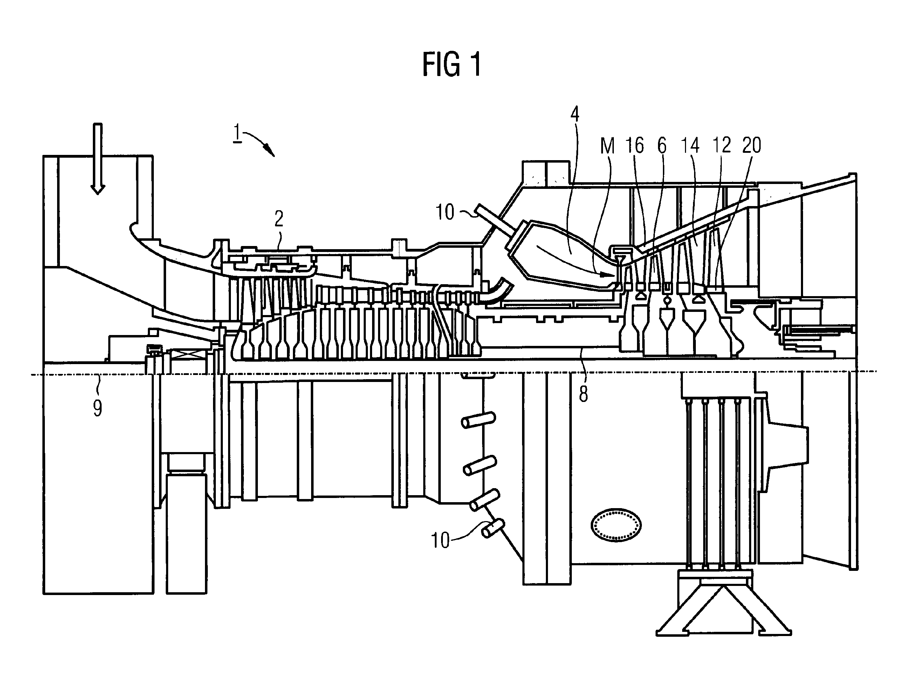

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist.

Die in der Art einer Ringbrennkammer ausgeführte Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinander folgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1500 °C ausgelegt. Um dabei auch eine hohe Lebensdauer oder Betriebsdauer der Gasturbine 1 zu gewährleisten, sind deren wesentliche Komponenten, insbesondere die Turbinenschaufeln 15 (d. h. die Leitschaufeln 14 und/oder die Laufschaufeln 12), kühlbar ausgebildet.

Zur Kühlung einer Turbinenschaufel 15, insbesondere einer Leitschaufel 14, wird Kühlluft K verwendet, die ins Innere der Turbinenschaufel 15 geleitet wird, um insbesondere die Außenwände von innen her zu kühlen. Ein Teil dieser Kühlluft K wird aus endseitig angeordneten Austrittsöffnungen der Turbinenschaufel 15 heraus geblasen, um den besonders hitzeempfindlichen Hinterkantenbereich 21 mit der Hinterkante 22 zu kühlen.

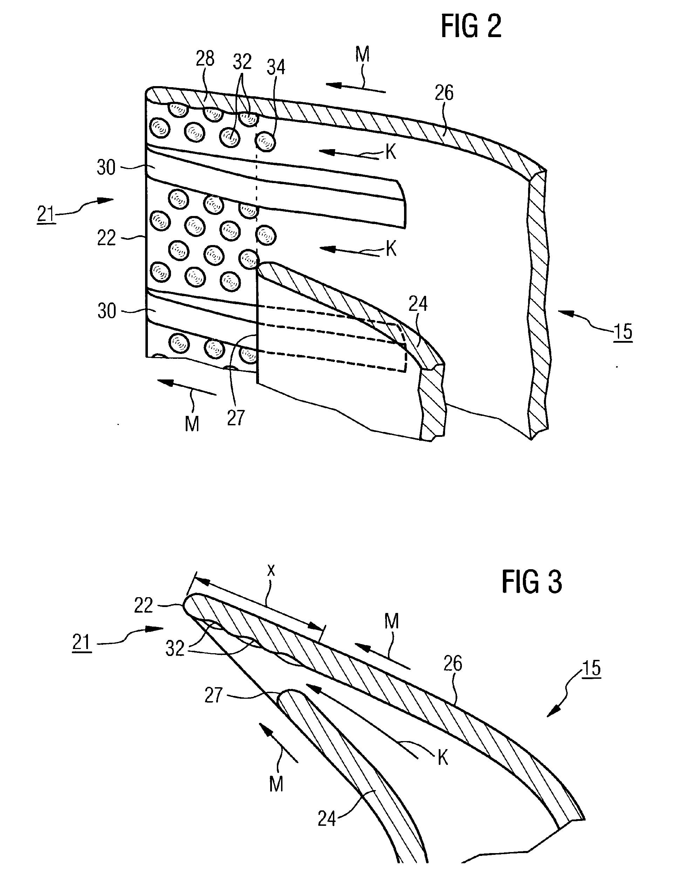

In den FIG 2 und 3 ist daher zur näheren Erläuterung des Kühlsystems der Turbinenschaufeln 15 im Bereich der Hinterkante 22 eine Turbinenschaufel 15 dargestellt, wobei FIG 2 eine teilgeschnittene Seitenansicht der Turbinenschaufel 15 und FIG 3 einen Querschnitt durch das Schaufelprofil zeigt. Wie aus den Figuren zu entnehmen ist, wird die Turbinenschaufel 15 auf beiden Seiten vom Arbeitsmedium M in Richtung der Hinterkante 22 umströmt, wobei das Schaufelprofil bezüglich des Arbeitsmediums M von der druckseitigen Schaufelwand 24 und der druckabgewandten oder saugseitigen Schaufelwand 26 begrenzt wird. Für eine bei einem hohen aerodynamischen Wirkungsgrad auch bezüglich der Kühlung geeignete Ausgestaltung des Hinterkantenbereichs 21, weist die Turbinenschaufel 15 eine so genannte Cut-Back-Hinterkante auf, bei der die druckseitige Schaufelwand 24 von der Hinterkante 22 derart zurückversetzt ist, dass die saugseitige Schaufelwand 26 eine über die Endkante 27 der druckseitigen Schaufelwand 24 hinausragende Hinterkantenfahne 28 ausbildet. Diese Abschnitte mit einer freistehenden, beidseitig dem Arbeitsmedium M ausgesetzten Hinterkantenfahne 28 werden lediglich von den stabilisierend wirkenden Verstrebungselementen 30 unterbrochen, wobei der Hinterkantenbereich 21 in diesen so genannten "Land"-Abschnitten gemeinsam mit der bis zur Hinterkante 22 verlängerten druckseitigen Schaufelwand 24 gebildet wird. Es sind jedoch auch Varianten mit verkürzten oder nicht spitz zulaufenden Land-Abschnitten denkbar.

Bei dieser Cut-Back-Hinterkante wird die Hinterkantenfahne 28 bzw. die druckabgewandte oder saugseitige Schaufelwand 26 mit einem Kühlfilm aus Kühlluft K, die aus dem Innenraum der Turbinenschaufel 15 austritt, gekühlt. Dabei vermischt sich die Kühlluft K im Bereich der Hinterkantenfahne 28 mit dem druckseitig zuströmenden Arbeitsmedium M, so dass die Temperatur des entlang der Innenseite der druckabgewandten Schaufelwand 26 strömenden Kühlfilms im Bereich der Hinterkantenfahne 28 kontinuierlich ansteigt.

Um zu verhindern, dass hierdurch eine Überhitzung der Hinterkantenfahne 28 der Turbinenschaufel 15 eintritt, die zu Rissen führen kann, ist die Hinterkantenfahne 28 spezifisch für eine besonders effektive Wärmeübergabe an die durch den Kontakt mit dem heißen Arbeitsmedium M bereits vorgewärmte Kühlluft K ausgelegt. Dazu sind auf der druckzugewandte Seite der Hinterkantenfahne 28 eine Anzahl von muldenförmigen Vertiefungen 32 vorgesehen. Diese erzeugen eine Verwirbelung innerhalb der Kühlluftschicht, ohne eine Ablösung oder Verdrängung derselben von der Hinterkantenfahne hervorzurufen, wodurch sich ein erhöhter Wärmeübertrag von der Hinterkantenfahne 28 auf den Kühlfilm erreichen lässt. Damit ist bei gering gehaltenem Druckverlust eine erhöhte Kühlwirkung ermöglicht.

Die Vertiefungen 32 sind so ausgestaltet, dass deren jeweilige umlaufende Berandungskante 34 ausschließlich in der druckseitigen Fläche der Hinterkantenfahne 28 vorgesehen ist. Im Ausführungsbeispiel besitzen die Vertiefungen 32 jeweils die Gestalt eines Kugelabschnittes. Sie weisen daher eine kreisförmige Berandungskante 34 mit einem Radius von etwa 1/10 der Breite x der Hinterkantenfahne 28 auf. Die Tiefe eines Kugelabschnitts entspricht etwa 1/3 des Kugelradius. Damit ist eine gute Beeinflussbarkeit der Luftströmung sichergestellt, während die mechanische Stabilität der Hinterkantenfahne 28 höchstens unwesentlich herabgesetzt wird. Die Vertiefungen 32 bilden ein regelmäßiges Muster, so dass der beschriebene Kühlungseffekt gleichmäßig auf der gesamten druckseitigen Fläche der Hinterkantenfahne 28 (mit Ausnahme der durch Verstrebungselemente 30 unterbrochenen Abschnitte, die ohnehin für höhere thermische Belastungen ausgelegt sind) wirksam wird. Um einen besonders gleichmäßigen Kühlungseffekt zu erzielen, sind selbst die vom Muster vorgegebenen, jedoch aufgrund von Platzmangel am Ende der Hinterkantenfahne 28 nicht mehr vollständig auf die verbleibende Restfläche passenden Vertiefungen 32 eingearbeitet.

## Patentansprüche

1. Turbinenschaufel (15) für eine Gasturbine (1), mit einer saugseitigen Schaufelwand (26) und einer im Hinterkantenbereich (21) auf diese zulaufenden druckseitigen Schaufelwand (24), wobei die saugseitige Schaufelwand (26) eine zumindest in einem Teilabschnitt des Hinterkantenbereichs (21) über die Endkante (27) der druckseitigen Schaufelwand (24) hinausragende Hinterkantenfahne (28) umfasst, **dadurch gekennzeichnet, dass** die druckseitige Fläche der Hinterkantenfahne (28) eine Anzahl von muldenförmigen Vertiefungen (32) aufweist, und wobei die Vertiefungen (32) jeweils eine ausschließlich in der druckseitigen Fläche der Hinterkantenfahne (28) umlaufende Berandungskante (34) aufweisen.

2. Turbinenschaufel (15) nach Anspruch 1, wobei eine Anzahl von Vertiefungen (32) jeweils eine elliptische, insbesondere eine kreisförmige, Berandungskante (34) aufweist.

3. Turbinenschaufel (15) nach Anspruch 2, wobei eine Anzahl von Vertiefungen (32) jeweils die Gestalt eines Kugelabschnitts aufweist.

4. Turbinenschaufel (15) nach Anspruch 3, wobei der Radius des von einer Berandungskante (34) gebildeten Kreises jeweils 1/10 bis 1/4 der Breite (x) der Hinterkantenfahne (28) beträgt.

5. Turbinenschaufel (15) nach Anspruch 3 oder 4, wobei die Tiefe des Kugelabschnitts jeweils etwa 1/3 des Kugelradius beträgt.

6. Turbinenschaufel (15) nach einem der Ansprüche 1 bis 5, bei der die Vertiefungen (32) regelmäßig angeordnet sind.

7. Turbinenschaufel (15) nach einem der Ansprüche 3 bis 5 mit regelmäßig angeordneten Vertiefungen (32) von jeweils gleicher Abmessung, wobei der Abstand zwischen den Berandungskanten (34) je zwei benachbarter Vertiefungen (32) das ein- bis eineinhalbfache des Kugeldurchmessers beträgt.

8. Verfahren zum Kühlen einer Turbinenschaufel (15) nach einem der Ansprüche 1 bis 7, bei dem an der Hinterkantenfahne (28) entlangströmende Kühlluft (K) durch an der Hinterkantenfahne (28) angeordnete Vertiefungen (32) lokal verwirbelt wird.

9. Verwendung einer Turbinenschaufel (15) nach einem der Ansprüche 1 bis 7 in einer Gasturbine.

## Claims

1. Turbine blade (15) for a gas turbine (1), with a suction-side blade wall (26) and with a delivery-side blade wall (24) tapering toward the latter in the trailing edge region (21), the suction-side blade wall (26) comprising a trailing edge tab (28) projecting beyond the end edge (27) of the delivery-side blade wall (24) at least in a portion of the trailing edge region (21), **characterized in that** the delivery-side surface of the trailing edge tab (28) has a number of trough-shaped depressions (32), and the depressions (32) in each case having a boundary edge (34) running around solely in the delivery-side surface of the trailing edge tab (28).

2. Turbine blade (15) according to Claim 1, a number of depressions (32) having in each case an elliptic, in particular a circular boundary edge (34).

3. Turbine blade (15) according to Claim 2, a number of depressions (32) having in each case the configuration of a spherical segment.

4. Turbine blade (15) according to Claim 3, the radius of the circle formed by a boundary edge (34) amounting in each case to 1/10 to 1/4 of the width (x) of the trailing edge tab (28).

5. Turbine blade (15) according to Claim 3 or 4, the depth of the spherical segment amounting in each case to about 1/3 of the sphere radius.

6. Turbine blade (15) according to one of Claims 1 to 5, in which the depressions (32) are arranged regularly.

7. Turbine blade (15) according to one of Claims 3 to 5, with regularly arranged depressions (32) of the same dimension in each case, the distance between the boundary edges (34) of two adjacent depressions (32) in each case amounting to once to one-and-a-half times the sphere diameter.

8. Method for cooling a turbine blade (15) according to one of Claims 1 to 7, in which cooling air (K) flowing along the trailing edge tab (28) is swirled locally by depressions (32) arranged on the trailing edge tab (28).

9. Use of a turbine blade (15) according to one of Claims 1 to 7 in a gas turbine.

## Revendications

1. Aube ( 15 ) pour une turbine ( 1 ) à gaz, comprenant une paroi ( 26 ) d'aube du côté extrados et une paroi ( 24 ) d'aube du côté intrados allant dans la partie ( 21 ) vers la paroi d'aube du côté extrados, dans laquelle la paroi ( 26 ) d'aube du côté extrados comprend un talon ( 28 ) de bord arrière dépassant au moins dans une sous section de la partie ( 21 ) du bord arrière du bord ( 27 ) d'extrémité de la paroi ( 24 ) d'aube du côté extrados, **caractérisée en ce que** la surface du côté intrados du talon ( 28 ) du bord arrière a un certain nombre de cavités ( 32 ) en forme de cuvette et dans laquelle les cavités ( 32 ) ont respectivement un bord ( 34 ) de bordure faisant le tour exclusivement dans la surface du côté intrados du talon ( 28 ) du bord arrière.

2. Aube ( 15 ) de turbine suivant la revendication 1, dans laquelle un certain nombre de cavités ( 32 ) ont respectivement un bord ( 34 ) de bordure elliptique, notamment circulaire.

3. Aube ( 15 ) de turbine suivant la revendication 2, dans laquelle un certain nombre de cavités ( 32 ) ont respectivement la forme d'un segment sphérique.

4. Aube ( 15 ) de turbine suivant la revendication 3, dans laquelle le rayon du cercle formé par un bord ( 34 ) de bordure représente respectivement de 1/10 à 1/4 de la largeur ( x ) du talon ( 28 ) du bord arrière.

5. Aube ( 15 ) de turbine suivant la revendication 3 ou 4, dans laquelle la profondeur du segment sphérique représente respectivement environ 1/3 du rayon de la sphère.

6. Aube ( 15 ) de turbine suivant l'une des revendications 1 à 5, dans laquelle les cavités ( 32 ) sont disposées régulièrement.

7. Aube ( 15 ) de turbine suivant l'une des revendications 3 à 5, ayant des cavités ( 32 ) disposées régulièrement de même dimension, l'intervalle entre les bords ( 34 ) de bordure de respectivement deux cavités ( 32 ) voisines représentant de une fois à une fois et demie le diamètre de la sphère.

8. Procédé de refroidissement d'une aube ( 15 ) de turbine suivant l'une des revendications 1 à 7, dans lequel on fait tourbillonner localement de l'air ( K ) de refroidissement passant le long du talon ( 28 ) de bord arrière par des cavités ( 32 ) disposées sur le talon ( 28 ) du bord arrière.

9. Utilisation d'une aube ( 15 ) de turbine suivant l'une des revendications 1 à 7 dans une turbine à gaz.
